(19) Europäisches Patentamt / European Patent Office / Office européen des brevets

(11) **EP 4 671 553 A1**

(12) **EUROPEAN PATENT APPLICATION**

(43) Date of publication:
**31.12.2025   Bulletin 2026/01**

(21) Application number: **24185467.8**

(22) Date of filing: **28.06.2024**

(51) International Patent Classification (IPC):
**F16C 19/52** (2006.01)      **G01L 5/00** (2006.01)
**G01M 13/04** (2019.01)

(52) Cooperative Patent Classification (CPC):
**F16C 19/522; F16C 41/00; F16C 43/04;**
**G01L 1/246; G01L 5/0009; G01M 13/04;**
F16C 2233/00; F16C 2361/61

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **S360 Group B.V.**
**5342 NJ Oss (NL)**

(72) Inventors:
• **ANGELIS, Georgo Zorz**
  **5342 NJ Oss (NL)**
• **van GENUCHTEN, Henricus Cornelis Maria**
  **5342 NJ Oss (NL)**
• **JOOSTEN, Wouter**
  **1399 HG Muiderberg (NL)**

(74) Representative: **DeltaPatents B.V.**
**Fellenoord 370**
**5611 ZL Eindhoven (NL)**

(54)   **METHOD AND SYSTEM FOR DETERMINING A LOADED ZONE OF A BEARING**

(57)   A system (100) comprising first and second meshing components, wherein the first meshing component (127, 128) is mounted on a high-speed shaft (107, 108) and engages with the second meshing component (120) mounted on a low-speed shaft (110), and wherein the low-speed shaft is supported by a bearing arrangement comprising two rolling element bearings, one or both of which is instrumented with a sensor arrangement comprising n sensing elements disposed with a uniform angular spacing $\theta$ and arranged so as to measure strains induced in a stationary race of the bearing by the passage of rolling elements during bearing operation, the system further comprising a processor which is configured to perform steps of:
i. receiving strain signal data, Data=[s1(t) s2(t),..., sn(t)], from each sensor;

ii. low-pass filtering the received signal data into a low-frequency component Data_dc and a high-frequency component Data_ac and squaring the high-frequency component to obtain a squared signal;
iii. low-pass-pass filtering the squared signal and taking the square root of a resulting low-frequency component of the squared signal to obtain an enveloped strain signal Datas_dc; and
iv. linearly transforming the enveloped strain signal Datas_dc using a first harmonic of signatures A_dc, which reflect spatially dominant strain profiles induced by a loaded zone of the bearing, and which describe how unknown basis functions P_dc influence the behaviour of each sensor, as measured in Datas_dc, to compute a resultant force vector $F_R$ associated with the loaded zone.

Fig. 1a

**EP 4 671 553 A1**

**Description**

**Method and system for determining a loaded zone of a bearing**

The present invention relates to the field of determining bearing loads in order to calculate loads on a system, especially driveline loads in a powertrain system which comprises the bearing. More particularly, axial/radial forces are determined from a resultant force vector associated with a loaded zone of the bearing, based on strain sensor signals that reflect the strains induced on a raceway of the bearing from the passage of rolling elements.

**Background**

An example of a system for measuring real-time rolling element loads in a bearing is disclosed in US5952587. A plurality of strain sensors are disposed about an inner race or outer race of the bearing, which output sensor data corresponding to detected loads. A control unit determines a load zone of the bearing in real time from the sensor data. Before operation of the system in real-time, the sensors are calibrated to model a relationship of roller load and measured strain. The bearing is then rotated and sensor data is output from each the sensors. The sensor data is cyclical, and peaks and valleys are extracted from the sensor data to determine rolling element loads and measured bearing speed. The loaded zone of the bearing is characterized by summing the rolling element loads as vectors in space around the bearing. The sum is performed while accounting for the angular position of each rolling element in the bearing. The rolling element loads are resolved into the three mutually-orthogonal components in Cartesian space, like components are summed, and the magnitude and direction of the resultant vector are determined from the vector sum of the three components.

A further example of a method and system for determining loads on radial and/or thrust bearings is disclosed in GB2582597, whereby the loads are determined using an arrangement of n uniformly spaced strain sensing elements, preferably embodied as a fibreoptic sensor module, which are disposed on a stationary ring of the bearing. The received signals are digitized and placed in a measurement matrix S. The measured strains are influenced by a payload acting on the bearing, which exhibits a payload signature observable at a ball-pass frequency (BPF). A signature matrix A is constructed that describes how the digitized signals are influenced by unknown time basis functions associated with the bearing payload. A matrix P of unknown time basis functions is derived according to P = S*pInvA, where pInvA is a pseudo-inverse of the signature matrix A. The payload and bearing speed may be computed from the derived time basis functions.

**Summary**

The invention defines a method of determining a loaded zone of a bearing and a system comprising the bearing, which is instrumented with a sensor arrangement, and which comprises a processor which is programmed to execute the method, to derive a resultant force vector acting on the bearing. The method is particularly suitable for application in powertrain systems. Suitably, the processor is further configured to calculate parameters of interest associated with the system, such as thrust load and motor torque loads, using axial and radial force components derived from the resultant force vector.

The system comprises first and second meshing components such as gears, which are mounted on respective first and second shafts. The first meshing component has a smaller diameter than the second and, in use, rotates at a higher speed. The first shaft will therefore be defined as a high-speed shaft (HSS) and the second shaft on which the second meshing component is mounted will be defined as a low-speed shaft (LSS). The low-speed shaft is supported by a bearing arrangement comprising two or more rolling element bearings.

At least one of the rolling element bearings is instrumented with a sensor arrangement comprising n sensing elements ($S_1$, $S_2$ ... $S_n$) disposed with a uniform angular spacing ($\theta$) and arranged so as to measure strains induced in a stationary race of the bearing by the passage of rolling elements during bearing operation, such as described in GB2582597. The present invention is based on the understanding that the loaded zone of a bearing induces spatial strain profiles that can be described by spatial signatures at specific harmonics of the signatures, which in combination with specific processing of the measured data, can be used to reconstruct the loaded zone of the bearing.

The processor is configured to perform steps of:

    i. receiving strain signal data from the sensor arrangement, where Data=[s1(t) s2(t),..., sn(t)];
    ii. low-pass filtering the received signal data into a low-frequency component Data_dc and a high-frequency component Data_ac and squaring the high-frequency component to obtain a squared signal Datas;
    iii. low-pass-pass filtering the squared signal and taking the square root of a resulting low-frequency component of the squared signal to obtain an enveloped strain signal Datas_dc; and
    iv. linearly transforming the enveloped strain signal Datas_dc using a first harmonic of signatures A_dc, which reflect spatially dominant strain profiles induced by a loaded zone of the bearing, and which describe how unknown basis functions P_dc influence the behaviour of each sensor, as measured in Datas_dc, to compute a resultant force vector $F_R$ associated with the loaded zone of the bearing.

The signatures which reflect the spatially dominant strain profiles induced by the loaded zone are periodic signals and are described by A_dc(phi), with phi being the sensor angle or sensor position relative to the rolling elements. The linearly transformed enveloped strain signal thus relates the sensor signal to its angular position.

In a first embodiment, the processor is configured to compute the resultant force vector directly from the linearly transformed signal by summing all vector components of the transformed signal in the radial plane.

This represents a first method of reconstructing the loaded zone of the bearing in real time.

In a second embodiment, the processor is further configured to recover the time basis functions P_dc from the linearly transformed strain signal according to:
P_dc(t)=pinv(A_dc)*Datas_dc(t), where P_dc is a matrix of time basis functions associated with the bearing loaded zone and A_dc is a matrix of signatures which comprises at least the $1^{st}$ harmonic of the signatures.

The resultant force vector $F_R$ may be computed from the recovered time basis functions associated with the first harmonic.

This represents a second method of reconstructing the loaded zone of the bearing in real time.

Suitably, the processor is further configured to visualise the reconstructed loaded zone via e.g. a polar plot.

In a further development, the signature matrix A_dc further comprises a $0^{th}$ harmonic and time basis functions associated with the $0^{th}$ harmonic are also recovered. More preferably, the signature matrix A_dc further comprises a $2^{nd}$ and $3^{rd}$ harmonic for which the associated time basis functions are recovered using the measured data in Datas_dc. This enables a sensor output to be estimated at all angular positions around the bearing, i.e. also at virtual positions in between the actual sensor positions.

The processor is then configured to construct an estimated signal Datas_dc_est(t), based on Datas_dc_est(t) =P_dc(t)*A_dc(phi). In effect, the estimated signal is constructed by multiplying each harmonic signature with its associated time basis function, followed by a summation of all obtained components.

The processor may be further configured to visualise the strains in the estimated signal via a polar plot that pairs a virtual sensor position with rolling element position.

The signatures A_dc may be derived in advance via modelling and simulation and/or experiments conducted on a test bench.

Alternatively, the signatures may be derived from Datas_dc. In a further development, the processor is configured to construct a measurement matrix S(t) with in each column a time history of the individual sensor output, i.e. Datas_dc value, for a time interval. The processor is further configured to perform steps of:

- transposing S to obtain a matrix S';
- multiplying S' by S;
- decomposing S'*S via a singular value decomposition or an eigen vector/eigen value decomposition and
- deriving the signatures A_dc from the decomposition.

As described in GB2582597, it is important that the rows in the signature matrix exhibit orthogonality. This is ensured via appropriate selection of the number and positioning of the sensing elements. The number of equidistantly spaced sensing elements is selected to be coprime with the number of rolling elements b of the bearing in question.

In a preferred embodiment, the sensor arrangement comprises a fibreoptic sensor (FOS) with at least 7 sensing elements (Fibre Bragg Gratings (FBGs). The FOS may be arranged directly on the stationary ring of the bearing - the bearing outer ring in most cases - for example, in a groove machined into the outer ring. Preferably, the FOS is provided on a sleeve that is mounted between the outer ring and a bearing seat in e.g. a gearbox case.

When the bearing arrangement comprises a thrust bearing, such as spherical roller thrust bearing, the FOS may be provided on a washer that is mounted between the stationary ring and an associated, axially oriented bearing seat. The FOS may also be provided on a sleeve that surrounds an outer circumference of the bearing ring.

The sensing elements are arranged with a uniform spacing. When the instrumented bearing is a bearing that takes up axial and radial load components, the sensors are arranged around the circumference of the bearing ring. In cases where the instrumented bearing takes up only radial loads, the sensing elements may be arranged in an area related to the bearing loaded zone.

The sensor arrangement thus depends on the forces that are transmitted via the bearing, which of course depends on the bearing arrangement. Each of the bearings in the bearing arrangement may be instrumented with a sensor arrangement as described above, whereby the processor receives signals from each senor arrangement and calculates the resultant load vector in accordance with the invention. Which bearings need to be instrumented depends on which parameters of interest associated with the system are to be computed.

In one embodiment, the system is a marine propulsion driveline whereby the first gear is a pinion gear mounted on a high-speed input shaft that is coupled to a motor. The pinion gear drives a gear wheel mounted on a low-speed output shaft, which is supported by an arrangement of two radial rolling element bearings and one thrust rolling element bearing. Let us assume that the only parameter of interest is motor torque. This can be derived from the gear mesh forces, which are radial forces transmitted to the low-speed shaft via the bearings. It may be that gear mesh forces can be computed from the radial forces transmitted by only one of the radial bearings, meaning that only this bearing needs to be instrumented.

When a further parameter of interest is e.g. propeller thrust force, a sensor arrangement is provided at a location where a reaction force to the thrust force is experienced, for example, via an instrumented spherical roller thrust bearing or another bearing that transmits the axial thrust force.

Therefore, when designing the measurement configuration for a system, a first principles physical model of the system is derived which describes relations between the system parameters of interest and the forces transmitted via the bearings. The relations follow from a force and moment balance, i.e. 3 forces and moments that govern an equilibrium state of the system. A sensor arrangement is then provided at each location where the transmitted forces are required to calculate the parameters of interest.

The system may therefore be any kind of powertrain system in marine propulsion, industrial or automative application which comprises a driven gear in a gearbox. The gearbox may also be of any type, i.e. parallel, concentric (such as planetary) or a right-angle gearbox. As mentioned, the high-speed shaft (HSS) may be an input shaft on which a drive gear is mounted. The low-speed shaft (LSS) which is supported by one or more bearings instrumented in accordance with the invention may be an output shaft of the driveline system, or may be an intermediate-speed shaft (ISS) of the driveline. In other examples, the low-speed shaft may be an input shaft, such as the main shaft of a wind turbine. Typically, the wind turbine has a gearbox comprising an intermediate stage and a high-speed stage that is coupled to a generator. The bearings which support the main shaft may be instrumented, to detect forces acting on the LSS and/or to detect forces acting on the associated ISS or HSS, which are related to torque and other forces acting on the system

The system may even comprise a motor-driven screw compressor, whereby the processor is configured to determine torque loads in both the male and female rotors. The analogy is as follows. The screw rotor profile on the male and female shaft can be considered analogous to the gear mesh profile on a pinion and gear. The mesh forces induced by the motor torque translate into reaction forces at the force transmission paths. In both cases the forces are transmitted by the bearings that transmit the axial and/or radial forces.

As mentioned, depending on the system and the parameter of interest, it may not be necessary to instrument each bearing of the bearing arrangement. However, it can nonetheless be advantageous to provide each bearing in the force transmission paths with a sensor arrangement. When the parameter of interest can be computed from a subset of the calculated forces, the redundant information can be used to perform in-situ calibration of the sensor arrangements.

The signals received by the processor are strain signals. To transform strain values into force values, a strain-to-force calibration factor is needed. Each instrumented bearing may of course be calibrated in advance on a test bench, but in-situ calibration can save time and may be more accurate.

The processor is then configured to receive a known input value of one of the parameters of interest, e.g. motor torque, which is measured using e.g. a torque sensor on the input shaft. The processor is suitably programmed with equations which describe the force-moment balance of the system and uses the known input to solve the equations to compute calibration factors for each sensor arrangement.

When the system comprises two instrumented radial bearings, only one of which has been calibrated in advance, the processor is suitably configured to solve the force-moment equations to compute a calibration factor for the other instrumented bearing in situ, thus enabling a parameter of interest, such as input motor torque to be computed during operation.

Even when neither of the instrumented radial bearings has been calibrated in advance, the force-moment equations can be solved in order to compute a ratio between the associated calibration factors. This may be monitored as a degradation variable, for detecting premature failure of components (i.e. bearings and gears) or for detecting non-favourable operating conditions such as propellor inefficiency or hull inefficiency in embodiments where the system is a marine propulsion driveline such as described above. Thus, the method and system of the invention can also be used for condition monitoring.

In systems where the gear on the low-speed shaft can be driven by a forward gear or a reverse gear, depending on operation mode, a shift in the operation mode may be detected from the resultant force vector that is computed according to the method of the invention. The calculated amplitude of the force is dependent on a calibration factor, but the direction of the vector is independent of calibration. A change between forward operation and reverse operation will cause a shift in the resultant force angle, which may be detected in order to determine the operation mode.

Furthermore, the relative contribution of the individual transmission forces measured at the sensor locations changes, depending on the mode of operation. This difference can be detected when e.g. two of the radial bearings are instrumented with a sensor arrangement, and does not depend on the amount of non-zero torque or thrust force on the system.

A system provided with one or more instrumented bearings in accordance with the invention is thus capable of determining several parameters of interest.

In some embodiments, especially in marine propulsion systems, the parameters of interest include motor torque, thruster torque and thruster force. In order to compute input power and output power, rotational speed is also needed.

The speed of a cage that separates the rolling elements in an instrumented bearing may also be computed from the high-frequency component of the strain signal Data_ac that is received by the processor. The speed of the input shaft and of the output shaft (propellor shaft) may be derived therefrom, based on known geometries of the bearings (contact angle, pitch diameter, rolling element diameter) and gear properties (gear ratio, gear or pitch diameter).

In a preferred embodiment, the processor is configured to recover time basis functions P_ac associated with rolling element passes, using a $b^{th}$ harmonic of spatial signatures A_ac which reflect the spatially dominant strain profiles induced by rolling element passes and describe how the basis functions P_ac influence the behaviour of each sensor as measured in Data_ac. Cage speed is computed from the recovered time basis functions P_ac. Ball pas angle may also be computed from the recovered time basis functions.

In a still further development, the computed ball-pass angle is used to create a frequency spectrum of the Data_ac signals received from each sensor arrangement, which is monitored over time in order to detect degradation variables, from which non-optimal operating conditions and/or premature failures can be detected.

The processor is configured to create the spectrum by averaging out sensor noise and dynamics content by:

- averaging the sensor signals Data_ac as a function of time; and
- averaging the time signals of all sensors as a function of ball pass angle.

The processor is suitably further configured to analyse an energy content of the created spectrum, and to monitor the analysed energy content as an indicator of developing faults.

In effect, the signal is averaged in the angle domain, which improves the signal quality of the data and enables frequency analysis for variable speed machines and machines that show dominant dynamic content not related to failure modes that need to be detected. This is especially beneficial for low-speed machines and planetary gearboxes that are difficult to monitor with traditional vibration sensors.

As will be understood, this method of creating a frequency spectrum may be used for condition-monitoring purposes, independent of load calculations and reconstruction of the bearing loaded zone. However, an advantage of a system comprising one or more bearings instrumented with the described sensor arrangement is that the same arrangement can be used for condition monitoring and to determine parameters of interest.

Suitably, the processor is further configured to determine key performance indicators (KPIs) associated with the system, based on the determined parameters of interest.

Using a marine propulsion powertrain as an example, the KPIs may include propellor efficiency, power/torque efficiency, power verses thruster rotational speed and hull efficiency.

A system that is provided with instrumented bearings in accordance with the invention is thus capable of determining system loads, degradation variables, and key performance indicators. Other advantages will be apparent from the following detailed description and accompanying drawings.

Brief description of the drawings

Fig. 1a    shows a marine propulsion powertrain, being an example of a system in which the method of the invention may be employed

Fig. 1b    is a radial cross-sectional view of an example of a bearing arrangement for supporting an output shaft of the powertrain depicted in Fig. 1a;

Fig. 1c    is an axial cross-sectional view of a bearing instrumented with a sensor arrangement;

Fig. 2a    shows an example of signal received from an instrumented bearing, decomposed in a high-frequency component and a low-frequency component;

Fig. 2b    shows an example of model-based signatures which describe the spatial strain profiles induced by rolling element passes;

Fig. 2c    shows as example of time basis functions associated with the signatures depicted in Fig. 2b and derived from a high-frequency component of the measured signal;

Fig. 2d    shows an example of an enveloped strain signal as obtained using the method of the invention;

Fig. 2e    shows an example of a $0^{th}$ - $3^{rd}$ harmonic of model-based signatures which describe the spatial strain profiles induced by a loaded zone of the bearing;

Fig. 2f    shows as example of time basis functions, plotted as a function of time, which are associated with the signature harmonics depicted in Fig. 2b;

Fig. 2g   shows plots of calculated harmonic components of the signatures in Fig. 2f, and a sum of the calculated components;

Fig. 3a   shows the enveloped strain signal from Fig. 2d, with decomposed harmonic components, measured data, and a reconstructed sensor signal.

Fig. 3b   shows a polar plot of a bearing loaded zone, reconstructed using an embodiment of the inventive method.

## Detailed description

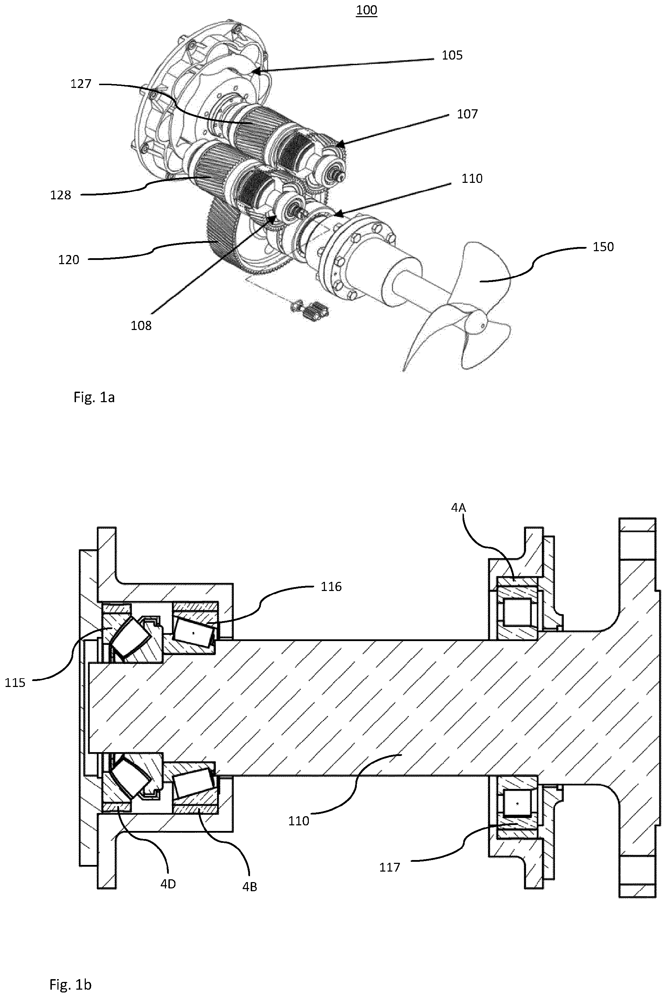

The invention relates to a method and system for determining a loaded zone of a bearing that forms part of the system. In one example, the system is a marine propulsion powertrain system 100 such as depicted in Fig. 1a. A coupling 105 connects a motor with a High-Speed Shaft (HSS) of the system - being the input shaft 107 or astern shaft 108 in the depicted example. The system further comprises a Low-Speed Shaft (LSS) or output shaft 110 to which a propeller 150 is coupled. The HHS is connected with the output shaft 110 via a transmission comprising gears and bearings. The output shaft 110 supports an output gear 120 that is driven by an ahead pinion 127 on the input shaft 107 or by an astern pinion 128 on the astern shaft 108.

An example of a typical bearing arrangement for supporting the output shaft 110 is shown in Fig. 1b. The arrangement comprises a spherical thrust roller bearing (STRB) 115, a tapered roller bearing (TRB) 116 and a cylindrical roller bearing (CRB) 117. The STRB 115 takes up the axial loads, while the TRB 116 and CRB 117 take up the radial loads.

Advantageously, the loads acting on the bearings and speed are measured in order to calculate one or more parameters of interest e.g. transmitted motor torque and thrust, which may be used, for example, to determine an optimal fuel-efficient operating condition. It is advantageous to derive these parameters of interest from measurements on the LSS, rather than on the HSS, as the motor/generator is often mechanically decoupled from the external thrust load and internal pre-loads. The resultant force on the LSS bearings is greater, which provides a better signal-to-noise ratio.

The system is provided with a sensor arrangement for measuring strain related to the transmitted motor toque and propulsion force, at the location of the force transmission paths, which enable motor torque and thrust force to be determined.

In the depicted arrangement, the thrust load may be determined from the axial load on the STRB 115. Motor torque may be determined from the radial loads acting on TRB 116 and CRB 117, that together are exposed to forces induced by the gear mesh forces that transmit the motor torque to the output shaft 110.

Each of the bearings which support the output shaft 110 is instrumented with a sensor arrangement, whereby the sensor arrangement may be integrated on a sleeve 4A, 4B, 4D that is arranged between the respective bearing and an associated bearing seat.

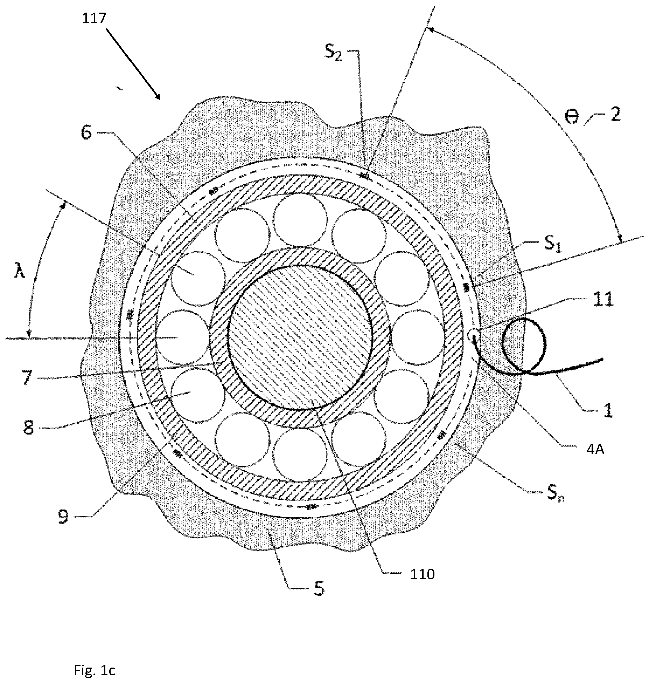

An example of a bearing provided with such a sensor arrangement is shown in more detail in Fig. 1c. Let us assume that the bearing is the cylindrical roller bearing (CRB) 117 from the arrangement depicted in Fig. 1b. The CRB 117 has an outer ring 6, an inner ring 7 and plurality of rolling elements, i.e. rollers, 8 which are retained in evenly spaced relation by a cage (not shown). The angular spacing between the rolling elements 8 is defined by the angle $\lambda$, which is equal to 360 degrees divided by the number of rollers b. The bearing is mounted to the output shaft 110 of the driveline, in a housing 5, i.e. a seat in an outer shell of the gearbox.

The measuring system comprises a number n of neighbouring, uniformly spaced sensing elements $S_1, S_2, S_3$ .... $S_n$, whereby n = 7 in the depicted example. The sensing elements are arranged circumferentially at a radial distance from a contact region between the rollers 8 and an outer raceway of the bearing outer ring 6 and are configured to detect strains induced in the bearing outer ring by the passage of the rollers during bearing operation. In this example, the sensing elements $S_1$ - $S_n$ are fibreoptic sensing (FOS) elements in an optical sensing fibre 1 that is integrated on a sleeve 4A mounted between the bearing outer ring 6 and the housing 5. The sensing fibre 1 leaves the sleeve through an opening 11 and is connected to an interrogator (not shown) which is connected to processor (not shown) configured to receive and process the sensor signals to reconstruct the bearing loaded zone.

The sensors $S_1$ .. $S_n$ in the depicted example are arranged around the full circumference of the bearing with an even angular spacing $\theta$, equal to 360°/7 i.e. 51.5° The number of sensors n is selected to be coprime with the number of rolling elements b. The number of sensors n may be a prime number, which satisfies the coprime condition, independent of the number of rolling elements b. In other examples, the sleeve is provided with 11, 13, 17, or 19 uniformly distributed sensing elements. It is also possible to provide the sensing fibre directly on the bearing outer ring, in e.g. a groove that is machined into the outer ring.

In accordance with the invention, the measured strains associated with at least one of the bearings are used to construct the loaded zone of the bearing and determine a resultant force vector $F_R$ acting on the bearing, from which axial and radial force components may be derived.

The processor receives the strain signals ($s_1\, s_2\, ...s_n$) from the sensing elements ($S_1, S_2... S_n$) during a series of time intervals t. This represents raw wavelength data, which will be referred to as Data=[s1(t) s2(t),..., sn(t)] or $s_i(t)$].

For each interval t, the processor is programmed with an algorithm that executes the following steps:

In a first step, the raw signal Data is detrended with the mean via low-pass filtering. This results in two decomposed time signals that show time variations at different scales, i.e. Data is decomposed into a low-frequency component Data_dc and a high-frequency component Data_ac = Data - Data_dc.

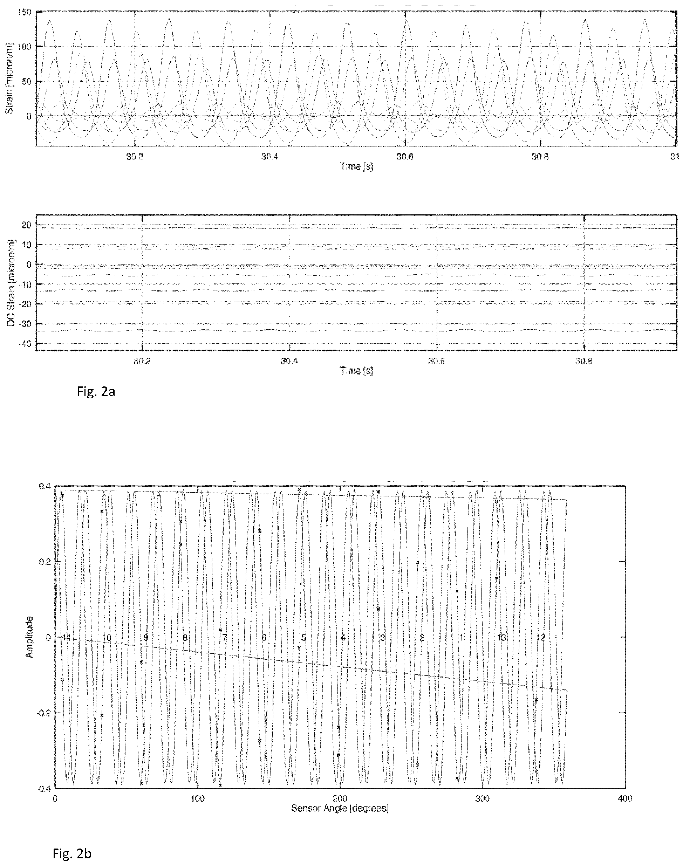

Data_ac captures the rolling element passings of the individual sensors that induce dynamic strain patterns on the sensorised sleeve 4A. Data_dc captures temperature variation effects and global strain patterns not correlated with rolling element passes. Figure 2a shows an example of plots of the decomposed signals received from a CRB provided with a sleeve having 13 FOS elements equidistantly distributed on the sleeve, whereby the lower plot shows the low-frequency component Data_dc and the upper plot shows the high-frequency component Data_ac.

In the example of the driveline shown in Fig. 1a, whereby each the bearings is equipped with evenly distributed strain sensors, the modelling assumption is that:

$$Data\_ac(t)=P\_ac(t)*A\_ac(phi),$$

where

P_ac    is a matrix of time basis functions that govern the strain behaviour of all sensor elements, which experience strain induced by the rolling element passes;

A_ac    is a signature matrix of signatures that describe the spatial profile induced by the rolling element passes;

phi      is senor angle relative to rolling element

The signatures in A_ac may be model-based signatures that are derived via simulations or from experiments conducted on a test bench. The signatures may also be derived from Data_ac using a method that will be described in more detail later.

Fig 2b shows an example of model-based signatures obtained for a TRB having 21 rolling elements and 13 strain sensors equidistantly distributed around the outer circumference of the bearing. The rolling elements create a 21st harmonic spatial profile around the circumference of the bearing and two periodic signatures are observed at this harmonic.

In Fig. 2b, the angular sensor locations are marked with the corresponding sensor number. At these angular sensor positions, the crosses represent the values that the signatures take for the corresponding sensors. This captures the knowledge that all the sensors at all times will observe an angle shifted version of the spatial signature that is completely determined by the sensors' relative positioning with respect to each other and the rolling element positions. Signature values for all location angles can thus be calculated, as shown by the first and second lines, and are not restricted to sensor location.

In this example, the rolling element induced strain profile is governed by only two time basis functions, which may be recovered from Data_ac and the pseudo inverse of the signature matrix according to:

$$P\_ac(t)=pinv(A\_ac)*Data\_ac(t))$$

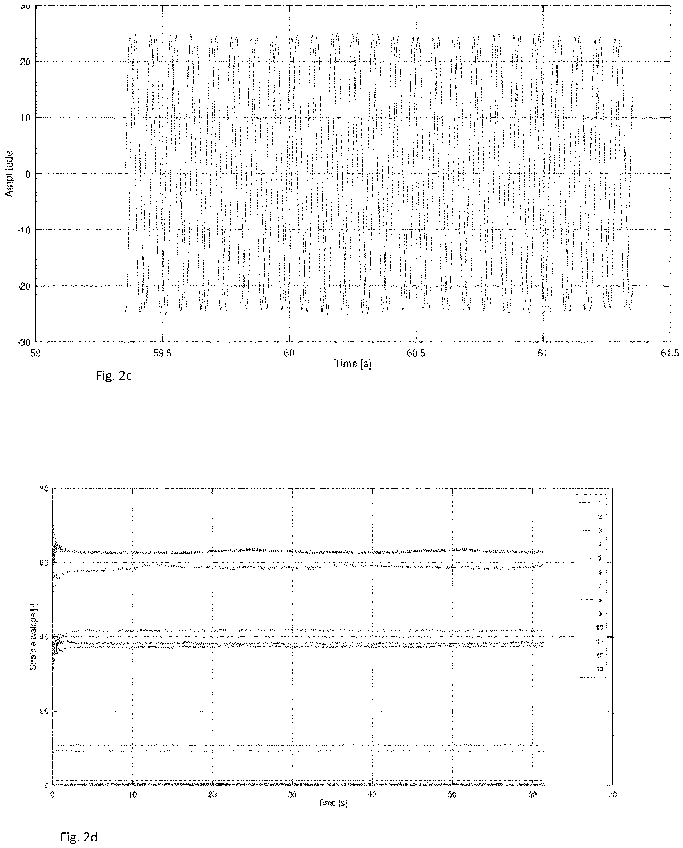

Figure 2c shows an example of the two time basis functions recovered using the signatures shown in Fig. 2b. In a preferred embodiment, the method comprises a step of recovering the two-time time basis functions P_ac(t) based on a bth harmonic of the A _ac signatures, with b equal to the number of rolling elements. Rotational speed of the bearing cage can be computed from the time basis functions and the amplitude correlates with load. Ball-pass angle can also be computed from the recovered time-basis functions, which may be used in a further development that will be described later.

The computed cage speed can be used to calculate the speed of the output shaft 110 and the speed of the input shaft, as these shaft speeds are influenced only by known or estimated geometric bearing properties (contact angle, pitch diameter, rolling element diameter) and gear properties (gear ratio that follows from the number of teeth of pinion and gear or pitch diameters of the gears involved).

It is also possible to obtain cage speed in other ways, e.g. by looking at the maximum strain values measured by a particular sensor due to the passage of rolling elements. Computing the speed from the recovered time basis functions is preferable, as this takes into account the strain values measured by all sensors, and provides a more accurate determination in situations where there is a high signal-to-noise ratio.

In cases where the bearing concerned experiences purely axial load, such as the spherical roller thrust bearing 115 in the arrangement depicted in Fig. 1b, the axial load on this bearing may be computed from the recovered time basis functions.

When the bearing concerned experiences load with an axial and radial components, the loaded zone and load angle cannot be constructed directly from the A_ac signatures. To compute the axial and radial component of the load on e.g. the CRB 117 and the TRB 116, the processor in a system according to the invention is configured to execute additional steps.

In a next step, the high frequency component Data_ac is squared to obtain a squared signal Datas = Data_ac x Data_ac. The squared signal is low-pass filtered, to remove the sum frequency that was introduced by modulation and to retrieve only the difference frequency, i.e. the dc component. Furthermore, the square root of the low-pass filtered signal Datas is taken to obtain an enveloped signal that will be referred to as Datas_dc.

An example of an enveloped strain signal Datas_dc is shown in Fig. 2d, as obtained from the high-frequency component of the signal Data_ac shown in Fig. 2a.

In one embodiment, the loaded zone is computed by recovering unknown time basis functions associated with the loaded zone, using the measured data in Datas_dc.

The behaviour of each strain sensor, as measured in Datas_dc, is governed by unknown time basis functions P_dc associated with the bearing loaded zone. In order to recover these time basis functions, spatial signatures that reflect the spatially dominant strain profiles induced by the loaded zone are needed. These signatures are more static in nature and will be referred to as A_dc.

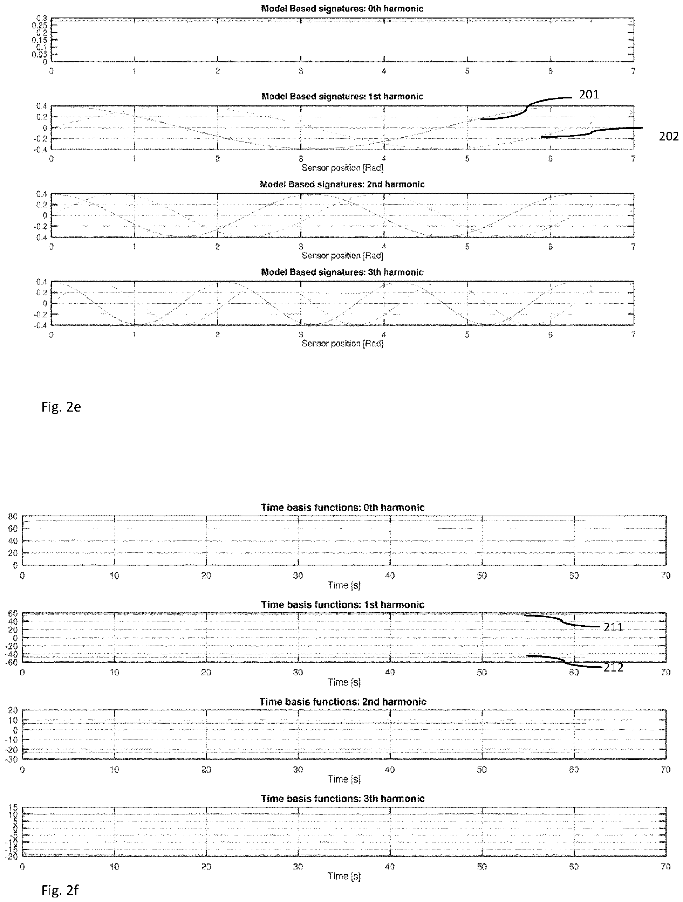

A suitable model for the spatial signatures is formed by harmonic components of the radial angle in a plane of the bearing perpendicular to the axial direction. To describe the spatial profile of a loaded zone related to axial and radial loads on a system, at least the $0^{th}$ and 1st harmonic signatures are pre-selected. Preferably, the $0^{th}$, $1^{st}$, $2^{nd}$ and $3^{rd}$ harmonic signatures are selected. These signatures are described by A_dc(phi), with phi being the sensor angle or sensor position relative to the rolling elements. For each harmonic component, two independent spatial signatures are defined to describe the loaded zone, whereby an example of the $0^{th}$ - $3^{rd}$ harmonic of the signatures obtained for a CRB with 13 equidistantly distributed sensing elements is shown in Fig 2e. The x-axis of each plot denotes sensor position and the y-axis denotes a relative amplitude of the signature components with respect to other sensors.

Taking the first harmonic as an example, the sinusoidal lines indicated with reference numerals 201 and 202 show the two spatial signatures, whereby the crosses indicate measured signature component values.

In an embodiment, the processor is configured to linearly transform the enveloped strain signal using at least a first harmonic of the A_dc signatures and to execute a step of recovering the associated time basis functions P_dc according to:

P_dc(t)=pinv(A_dc)*Datas_dc(t)

Fig 2f shows the time basis functions associated with the $0^{th}$ - $3^{rd}$ harmonic as a function of time, based on the model signatures shown in Fig. 2e. Since the loaded zone appears to be static in this experiment the time basis functions are constant over time, as the spatial signatures are also time invariant and only a function of the sensor angular location.

Again taking the first harmonic as an example, the line indicated with reference numeral 211 denotes a first time component P_dc_1(1) of the first harmonic and the line indicated with reference numeral 212 denotes a second time component P_dc_1(2) of the first harmonic.

The angle and amplitude of the resultant force on bearing may be computed from the recovered time basis functions associated with the first harmonic of the signatures as follows: F_ang=atan2(P_dc_1(1), P_dc-1 (2))/pi*180, with (P_dc_1(1), P_dc_1(2)) being the two time components of the first harmonic component as shown in Fig. 2f.

The resultant amplitude of the load is computed as:

F_amp=s2f*sqrt(P_dc_1(1).^2+P_dc_1(2).^2), with s2f a scaling factor from strain to force and 'sqrt' a square root operator.

A resultant force vector $F_R$ acting on the bearing is thus obtained, which may be computed using only the first harmonic.

The signatures A_dc may be model-based signatures, derived from modelling and simulations and or testing. In a further development, the signatures are derived from Datas_dc.

The processor is the configured to construct a measurement matrix S_dc with in each column a time history of the individual sensor output, as measured in Datas_dc, for a time interval. The transpose of matrix S_dc is obtained S_dc' and the data-based signatures are computed via cross correlation of sensor outputs over an interval, i.e.

S_dc'S_dc=A_dc' P_dc' P_dc A_dc

The result of the cross correlation is an n times n matrix that can be interpreted as above, which is then decomposed to reveal A_dc. This may be done using singular value decomposition or eigen vector/ eigen value decomposition.

It is assumed that P_dc'P_dc is a diagonal matrix and that the time basis functions P_dc are orthogonal components. This may be verified via measurements and algorithms that recover P_dc under normal operation with the model-based signatures.

Matrices [u, s, v] may be defined which represent the singular value decomposition of the correlation:

[u,s,v]=svd(S_dc'S_dc), and usv'=S_dc'S_dc=A-dc'P_dc'P_dcA_dc (since S_dc'*S_dc is non negative, the eigen value decomposition equals the svd) u=v=A_dc' and s= P_dc'P_dc.

The singular value decomposition thus gives the signatures A_dc (with normalized length by default, i.e. the unitary orthogonal basis u=v). Furthermore, the singular value matrix s (a rectangular matrix with zeros on the non-diagonals and non-negative numbers on the main diagonal) gives the magnitude of the time basis functions P_dc (diagonal entries in S_dc). An identical method may be used to construct the signatures P_ac from Data_ac.

Preferably, the method comprises a further step of reconstructing the measured signal Datas-dc(t) to obtain an estimated signal Datas_dc_est(t) for all sensor locations. To obtain an estimate of sensor output, the harmonic signature is multiplied with its related time basis function (a constant scaling factor in this case) followed by a summation of all obtained harmonic components. This gives an estimate of the strain profile, i.e. the loaded zone. Since the signature can be computed for locations other than the sensor locations, also virtual sensor output can be obtained to estimate the strain profile in between the sensor locations, whereby S virtual(t)=P dc(t)*A_dc(phi virtual).

The estimated signal Datas_dc_est(t) is calculated for all sensor positions, using the time basis functions recovered from the measured data, according to:

$$Datas\_dc\_est(t)=P\_dc(t)*A\_dc(phi).$$

The estimated signal may be used to pair a rolling element position with a virtual sensor position in real time, enabling advance analysis to be performed. The loaded zone may also be reconstructed based on the estimated signal.

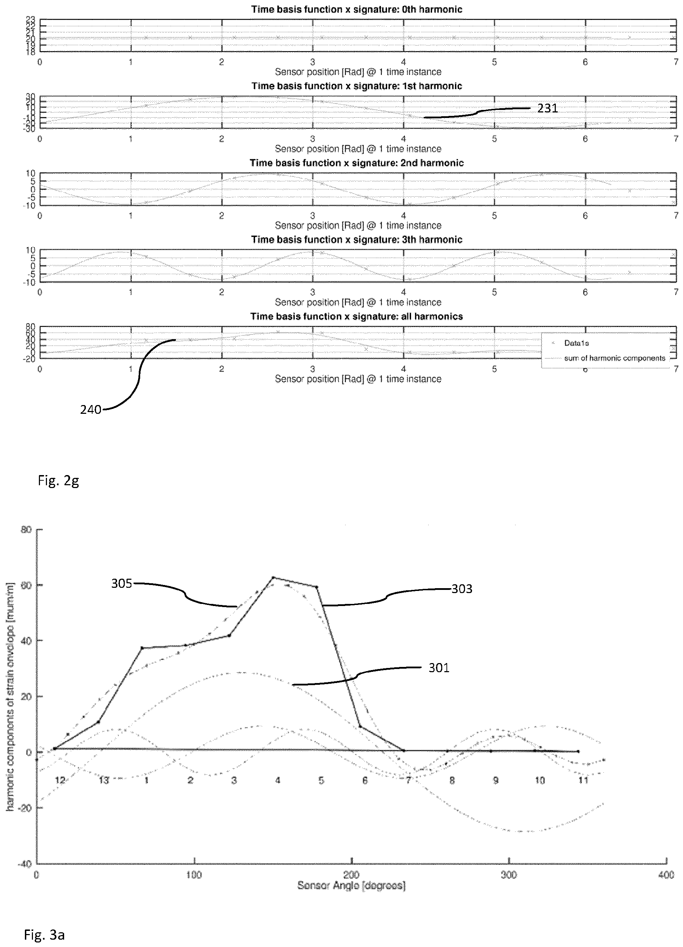

An example of an estimated signal 240 is shown in the lowermost plot of Fig. 2g. which is a summation of the scaled harmonic components computed for the $0^{th}$ - $3^{rd}$ harmonics. Taking the first harmonic as an example, the harmonic components are computed by multiplying the sinusoidal first harmonic signature components 201, 201 (refer Fig. 2e) with the values of the corresponding time basis functions 211, 212 (refer Fig. 2f) at time t. The obtained values are then summed to obtain the harmonic contribution indicated with reference numeral 231 in Fig. 2g. The harmonic contribution associated with the 0th, $2^{nd}$ and $3^{rd}$ harmonics are computed in the same manner.

Fig. 3a shows an example of the strain data envelope depicted in Fig. 2d, decomposed in harmonic components. The harmonic contribution of the $1^{st}$ harmonic components is represented by line 301, obtained by multiplying the derived time basis functions for the $1^{st}$ harmonic with the associated signature values around the full circumference of the bearing, followed by a summation, as described above. The angular position of the 13 sensors is indicated with numbers 1 - 13.

The solid line 303 in Fig. 3a interconnects the measured values in Datas_dc. The dashed line 305 represents the estimated signal, obtained by summing the $0^{th}$ - $3^{rd}$ harmonic components. The angle at which the first harmonic 301 attains maximum amplitude may be used as an indicator for the resulting loaded zone angle. The amplitude of the resultant force vector $F_R$ may be obtained by summing the computed harmonic components.

The loaded zone of the bearing may thus be reconstructed in real time. In the depicted example, the loaded zone has a width of approx. 220 degrees. When a bearing has a loaded zone width of around 180 degrees, this is indicative of zero clearance. A wider loaded zone indicates that the bearing is subject to a preload, while a narrower width is indicative of clearance.

Advantageously, the processor is further configured to perform a step of calculating the width of the loaded zone, in order to quantify the bearing preload/clearance condition.

In a further embodiment, the loaded zone of the bearing is computed directly from Datas_dc, by transforming this signal using the first harmonic signatures A_dc(1)(i), where A_1(i)=[sin(phi(i)) ; cos(phi(i))], with i the sensor signal at location phi(i).

The loaded zone is computed via a summation of all of the vector components in the radial x,y plane. A scaled version of the angle and the amplitude of this sum vector gives the resulting force and the load direction.

As an example, the strain component in horizontal direction (x) and vertical direction (y) of a sensor signal i, located at angle phi(i), Datas_dc(i) at time t, is computed in a horizontal and vertical component as:

$$Datas\_dc\_x(i)=Datas\_dc(i)*sin(phi(i))$$

$$Datas\_dc\_y(i)=Datas\_dc(i)*cos(phi(i))$$

Taking the sum over the horizontal components for all sensors Fx=sum_i Datas_dc_x(i) and vertical components Fy=sum_i Datas_dc_y(i) gives the x and y vector components of the resulting strain/force.

The force amplitude F_amp=sqrt(F_x^2+F_y^2) and F_angle=atan(Fx,Fy). The resultant force vector $F_R$ is thus obtained.

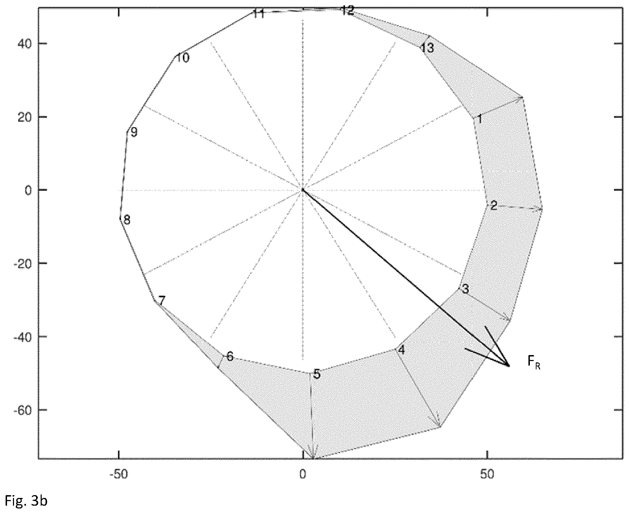

The loaded zone may be thus be reconstructed in real time using this second method. The reconstructed loaded zone, calculating according to the first or second method, may be visualized via polar plot, such as depicted in Fig. 3b, which shows the enveloped strain signal from Fig. 2e radially plotted at the associated sensor locations (numbered 1 to 13).

The grey area visualizes the load distribution or loaded zone. The resultant force vector F$_R$ is also shown, as computed from F_amp and F_angle, whereby in the depicted example, the resulting loaded zone angle is at 131 degrees.

The processor is further configured to calculate parameters of interest associated with the driveline system, based on the radial and axial forces that are measured at the force transmission points on the bearings.

Let us define that a force vector AF$_R$ is obtained for the CRB 117 shown in Fig. 1b and a vector BF$_R$ is obtained for the TRB 116. In an xyz coordinate system in which z represents axial direction, the transmitted forces at the CRB are the radial forces in x and y directions. To obtain these forces, the force vector AF$_R$ is suitably decomposed into x and y components: AFx, AFy. The transmitted forces at the TRB are the radial forces in x and y directions and the force vector BF$_R$ is suitably decomposed into BFx, BFy. The forces transmitted at the STRB 115 are the axial forces in z-direction, which will be defined as DF$_z$. These forces may be obtained from a resultant force vector that is calculated for the STRB according to the method of the invention. Alternatively, as described with reference to Figs. 2b and 2c, DF$_z$ may be calculated from the 21$^{st}$ harmonic of Data_ac and from the derived time basis functions P_ac associated with the 21$^{st}$ harmonic of the signatures A_ac.

We will also define a position system pA = (pAx, pAy, pAz), which defines the position of the force transmitted at a point A via the CRB 117. Within this coordinate system, other force transmission points pB, pC and pD are similarly defined, whereby

pB is the position of the force transmitted at point B via the TRB;
pC is the position of the gear mesh between the drive gear and the driven gear (which thus depends on whether the output gear 120 is being driven from the forward pinion 107 or the stern pinion 108) and
pD is the position of force transmitted at point D via the STRB.

The moment and force balance that relates the measurements and the transmitted forces at each bearing to the gear mesh force Cm, following from the motor torque, may be defined as follows:

$$-BFy \times pBz - Cm \times pCy \times \tan(\beta) + \frac{Cm \times pCz \times \tan(\alpha)}{\cos(\beta)} = 0$$

$$BFx \times pBz + Cm \times pCz = 0$$

$$\nu_{Mz} - Cm \times pCy = 0$$

$$AFx + BFx + Cm = 0$$

$$AFy + BFy - \frac{Cm \times \tan(\alpha)}{\cos(\beta)} = 0$$

$$-Cm \times \tan(\beta) + DFz + \nu_{Fz} = 0$$

Where:

$\alpha$     gear pressure angle (known based on gear geometry)
$\beta$     helix angle (known based on gear geometry)
$\nu_{Mz}$     thrust torque (propellor torque)
$\nu_{Fz}$     thrust force

Using the above relationships and known positions of pA, pB, pC, pD, i.e. known sensor locations, known gear geometries, the following equations are obtained for stern mode propulsion:

$$\frac{119*By}{400} - \frac{125*Cm}{6624} = 0 \qquad\qquad \text{Eq. 1.1}$$

$$\frac{119*Bx}{400} + \frac{71*Cm*By}{500} = 0 \qquad\qquad \text{Eq. 1.2}$$

$$v_{Mz} - \frac{545*\pi*Cm}{4838} = 0 \qquad\qquad \text{Eq. 1.3}$$

$$Ax + Bx + Cm = 0 \qquad\qquad \text{Eq. 1.4}$$

$$Ay + By - \frac{520*\pi*Cm}{6239} = 0 \qquad\qquad \text{Eq. 1.5}$$

$$\frac{749*Cm}{4729} + DFz + v_{Fz} = 0 \qquad\qquad \text{Eq. 1.6}$$

The numbers in the above equation are an example, and are completely determined by the geometrical distances between the sensing elements, positioned at the locations where forces are transmitted, and by the forces that act on the gear system and govern the equations and by the gear geometry.

When the astern pinion gear 108 is used to drive the output shaft 110, the following set of equations are obtained:

$$\frac{119*By}{400} - \frac{675*Cm}{4001} = 0 \qquad\qquad \text{Eq. 2.1}$$

$$\frac{119*Bx}{400} + \frac{41*Cm*By}{2065} = 0 \qquad\qquad \text{Eq. 2.2}$$

$$v_{Mz} + \frac{789*\pi*Cm}{7004} = 0 \qquad\qquad \text{Eq. 2.3}$$

$$Ax + Bx + \frac{412*\pi*Cm}{2927} = 0 \qquad\qquad \text{Eq. 2.4}$$

$$Ay + By - \frac{69*\pi*Cm}{232} = 0 \qquad\qquad \text{Eq. 2.5}$$

$$\frac{749*Cm}{4729} + DFz + v_{Fz} = 0 \qquad\qquad \text{Eq. 2.6}$$

From the equations above, it is clear that if a subset of the radial forces (Ax,Ay,Bx,By) are available as a measurement, it follows that Cm is uniquely determined. There is a one-to-one relation between a subset of the radial forces and the motor torque and as such the gear mesh force Cm. For example, it is clear from Eq 1.1 that Cm follows from By and vice versa. Furthermore, if By is substituted by Cm given Eq.1.1 in Eq. 1.5, it shows a one-to-one relation between Cm and Ay. It turns out that Cm can be recovered from either one of the signals (Ax,Ay,Bx,By) or a combination, and does not depend on the thrust force $v_{Fz}$.

There are 4 independent equations relating Cm with potentially available sensor measurements (Ax,Ay,Bx,By) that could be used to recover Cm. In the case that the sensors have different noise properties and/or signal (strain/Force) sensitivities, it is possible to weight the measurement such that the influence of noise is minimized by means of weighted least squares or another known algorithm. Cm is then recovered in a least squares sense to eliminate part of the noise and increase robustness, since there is a fail-safe option. In addition, Cm estimates from different combinations of sensors can be compared to check for sensor failures, or to check if the load is distributed according the design specifications.

If Cm is known, there is a one-to-one relation between DFz and the thrust force $v_{Fz}$. This follows by substituting the recovered value of Cm in Eq. 1.6. DFz depends also on Cm because of the helix gear geometry that introduces an axial force given the input torque.

In a well-designed drive system, all the forces acting on each stage of the driveline, the high speed stage, an intermediate or low speed stage should transmit all the forces and moments (3 forces and 3 moments) in a determined way. That means that all the forces are taken by the machine elements that transfer forces (bearings and gears) such that the force and moment balance have a well-defined solution. A system provided with a measuring arrangement in accordance with the invention exploits the fact that designers avoid "overdetermined" designs whereby it is unknown which bearing takes the load. The bearing and gear arrangement is designed such that the load is transmitted in a deterministic way to avoid unwanted load cases. A bearing arrangement, which is not under- or over constrained (overdetermined), is a good basis for a sensor design that measures the force transmission path.

On the other hand, by introducing redundancy in the measurement system, as explained above, it is possible to check if the force relations are consistent with the force and moment balance that was designed for. In the case that there are additional (disturbance) loads acting on the drive system, redundancy of the measurement system can be used to identify these disturbance loads and/or make sure that the torque and thrust measurements are not influenced (biased) by these disturbance loads.

A further advantage of being able to derive a parameter of interest i.e. motor torque from more than one sensor arrangement is that the redundant information can be used to calculate FOS calibration factors for the FOS arrangements, such that the sensor system can be calibrated in-situ, with a known reference torque indicator. The uncalibrated resultant force and direction can be decomposed in two orthogonal directions, i.e. x and y. The directionality of the force does not depend on calibration factors, since all the sensors are scaled with the same unknown calibration parameter. The amplitude of the force is however assumed to be unknown and needs to be calibrated. This means that in Equation 1, for Eq (1.1), Eq(1.2), Eq(1.4) and Eq(1.5) involving 2 FOS measuring arrangements with uncalibrated (Ax,Ay) and uncalibrated (Bx,By) and potentially known Cm, there are 4 isolated equations with 3 variables, i.e. 2 calibration parameters (calA, calB) that relate the uncalibrated measured force (Ax,Ay,Bx,By) with the calibrated force and motor force Cm as follows:

$$Ax\_cal = Ax*calA, \quad Ay\_cal = Ay*calA, \quad Bx\_cal = Bx*calB, \quad By\_cal = By*calB$$

The aforementioned equations from Equation 1 may be therefore be rewritten as:

$$\frac{119*By*calB}{400} - \frac{125*Cm}{6624} = 0 \qquad\qquad \text{Eq. 3.1}$$

$$\frac{119*Bx*calB}{400} + \frac{71*Cm*By}{500} = 0 \qquad\qquad \text{Eq. 3.2}$$

$$Ax+calA + Bx*calB + Cm = 0 \qquad\qquad \text{Eq. 3.4}$$

$$Ay*calA + By*calB - \frac{520*\pi*Cm}{6239} = 0 \qquad\qquad \text{Eq. 3.5}$$

The corresponding set of equations from equation 2 (astern propulsion) can be similarly rewritten.

In a further development, the processor is configured to calculate calibration factors in-situ, by solving the equations that result from the force and moment balance, based on a known input.

When the motor force and thus gear mesh force Cm is known, equations 3.1, 3.2, 3.4 and 3.5 are solved in order to compute the calibration parameters calA, calB.

When Cm is known, a calibration factor calD can also be computed for the sensor arrangement on the thrust bearing. The thrust torque can be computed from e.g. Eq 1.3, which is then input in Eq 1.6 to obtain calD.

When one of the sensor arrangements associated with one of the radial bearings has been calibrated in advance, e.g. on a test bench and calB is known, but Cm is unknown, the set of equations 3.1, 3.2, 3.4 and 3.5 is solved to compute Cm and the unknown calibration factor calA.

Alternatively, if the sensor arrangements on the radial bearings have not been calibrated, i.e. (CalA,CalB) unknown and Cm is unknown, it is possible to calibrate the ratio between calA and calB. The processor may be configured to solve Eq3.4 and Eq3.5 to compute a scaling factor alpha = calA/calB. This enables a degradation variable to be monitored. The relative decline of the thrust force over thrust torque ratio can be monitored, even if the measuring arrangement on the thrust bearing is not calibrated.

An alternative approach is to calibrate the FOS measuring arrangement up front in a dedicated test bench with known applied radial load or by simulation.

Furthermore, the specific gear mode of operation selected, see Eq1 and Eq2 forward or astern, changes the way the motor force meshes with the gear. Both the mesh location and the direction of gear forces changes. This is reflected by the change of the moment and force balance wrt the influence of Cm. This change of the moment and force balance equations as a result of gear shifting is detected, as it leads to a shift in the resultant force signature (amplitude and direction) at the force transmission locations, i.e. the measuring arrangement on the TRB and on the CRB.

Suitably, the processor is configured to detect a change in the direction of the resultant force vector $F_R$ in order to detect the gear mode of operation.

Preferably, the sensor arrangement associated with each bearing is calibrated, either in advance or in-situ (during first operation).

In the system depicted in Fig. 1a, the parameters of interest which are computed from the axial and radial forces as measured with the sensor arrangement on the STRB 115, TRB 116 and CRB 117 are Cm (motor force), $v_{Mz}$ (thruster torque) and $v_F$ (thruster force). The rotational speed of the gear Vthruster is also computed from at least one of the sensor arrangements, which as described, may be determined from the strain patterns induced by the rolling element passes.

The processor is further configured to determine one or more key performance indicators (KPIs) from the computed parameters of interest.

In an embodiment, the determined KPI is propellor efficiency.

The propellor efficiency is defined as a ratio between propellor trust force and propellor thrust torque. The ratio depends on the steady state operating condition, which is governed by the ratio between the water speed as seen by the propellor and the known propellor speed. Propeller efficiency changes over time under comparable operating conditions are important indicators that trigger inspection and/or maintenance actions on the propellor system.

In a further embodiment, the determined KPI is power/torque efficiency. Efficiency follows from the "ship speed through water" versus "the required power" relation. The required power follows indirectly from the (motor or) thruster torque and speed measurement. Power-speed curve changes over time are an important indicator for efficiency changes. If the power-speed curve changes are not explained fully by propellor efficiency changes then a likely contributor will be a change in hull efficiency.

The determined KPI may also be the required power versus thruster rotational speed curve. If, for similar operating conditions, the required power increases over time, this indicates an efficiency loss resulting from a degradation of propellor efficiency or hull efficiency. By also monitoring the propellor/thruster force versus thruster rotational speed, given comparable operating conditions, this can serve as a propellor efficiency indicator.

General propulsive (power) efficiency = propellor efficiency *hull efficiency $\rightarrow$ Hull efficiency =General propulsive (power) efficiency/propellor efficiency

Note that since some of the performance indicators only depend on the degradation (trend) relative to the situation at start, a fully calibrated sensor system is not required.

In a still further development, a frequency spectrum of the signals received from each sensor arrangement is created and monitored over time in order to detect degradation variables from which non-optimal operating conditions and/or premature failures can be detected.

The processor is configured to create the spectrum by averaging out sensor noise and dynamics content by:

- averaging the sensor signals Data_ac as a function of time;
- deriving a ball pass angle from the sensor signals Data-ac; and
- averaging the time signals of all sensors as a function of ball pass angle.

The ball pass angle may be derived from the recovered time basis functions P_ac, as described above.

The processor is further configured to perform a spectral analysis, whereby the energy content in the frequency spectrum, as reflected by the amplitudes, is monitored as indication that faults that are being developed. These faults may be gear tooth faults or bearing wear at the outer ring, inner ring or rolling elements. Non-optimal and unfavorable operating conditions can also be detected, since the energy content at the shaft running frequencies and higher harmonics are also made clearly visible in the spectrum

This makes it possible to do the frequency analysis for variable speed machines and/or machines that show dominant dynamic content not directly related to the failure modes that need to be detected. The presented method is especially beneficial for low speed machines and planetary gearboxes that are difficult to monitor with traditional vibration sensors.

The system of the invention can thus be used for condition monitoring purposes, as well as the determination of loads.

## Claims

1. A system (100) comprising first and second meshing components, wherein the first meshing component (127, 128) is mounted on a high-speed shaft (107, 108) and engages with the second meshing component (120) mounted on a low-speed shaft (110), and wherein the low-speed shaft is supported by a bearing arrangement comprising two rolling element bearings (115, 116, 117), one or both of which is instrumented with a sensor arrangement comprising n sensing elements ($S_1, S_2 ... S_n$) disposed with a uniform angular spacing ($\theta$) and arranged so as to measure strains induced in a stationary race of the bearing by the passage of rolling elements during bearing operation, the system further comprising a processor which is configured to perform steps of:

> i. receiving strain signal data, Data=[s1(t) s2(t),..., sn(t)], from each sensing element of an instrumented bearing;
> ii. low-pass filtering the received signal data into a low-frequency component Data_dc and a high-frequency component Data_ac and squaring the high-frequency component to obtain a squared signal Datas;
> iii. low-pass-pass filtering the squared signal and taking the square root of a resulting low-frequency component of the squared signal to obtain an enveloped strain signal Datas_dc; and
> iv. linearly transforming the enveloped strain signal Datas_dc using a first harmonic of signatures A_dc (201, 202), which reflect spatially dominant strain profiles induced by a loaded zone of the bearing, and which describe how unknown basis functions P_dc (301, 302) influence the behaviour of each sensing element, as measured in Datas_dc, to compute a resultant force vector $F_R$ associated with the loaded zone of the bearing.

2. System of claim 1, wherein strain sensing elements ($S_1, S_2 ... S_n$) are fibreoptic sensing elements of a sensing fibre (1), with at least seven sensing elements, and wherein the number of sensing elements is coprime with a number b of rolling elements of the bearing (115, 116, 117).

3. System of claim 1, wherein the resultant force vector $F_R$ is computed by summing all vector components of the linearly transformed signal in a radial plane of the bearing.

4. System of claim 1 or 2, wherein the processor is further configured to recover the time basis functions P_dc from the linearly transformed enveloped strain signal according to:

$$P\_dc(t)=pinv(A\_dc)*Datas\_dc(t)),$$

where
P_dc is a matrix of time basis functions associated with the bearing loaded zone and A_dc is a matrix of signatures which comprises at least the $1^{st}$ harmonic of the signatures; and wherein the resultant force vector $F_R$ is computed from the recovered time basis functions associated with the first harmonic.

5. System of claim 4, wherein the signature matrix A_dc further comprises a $0^{th}$ harmonic of the signatures and wherein the processor is further configured to:

> • recover the time basis functions associated with the $0^{th}$ harmonic; and
> • construct an estimated signal Datas_dc(est)(t) (240, 305) by multiplying each harmonic signature with its associated time basis function, followed by a summation of all obtained components.

6. System of any preceding claim, wherein the spatial signatures A_dc are model-based signatures derived in advance via modelling and simulation and/or testing.

7. System of any of claims 1-5, wherein the spatial signatures A_dc are data-based signatures derived from Datas_dc, by constructing a measurement matrix S(t) with in each column a time history of each individual sensor output, as measured in Datas_dc, for a time interval, and wherein the processor is further configured to perform steps of:

> • transposing S to obtain a matrix S';
> • multiplying S' by S;
> • decomposing S'*S via a singular value decomposition or an eigen vector/eigen value decomposition and
> • deriving the signatures A_dc from the decomposition.

8. System of any preceding claim, wherein the processor is further configured to recover time basis functions P_ac associated with rolling element passes, using a $b^{th}$ harmonic of spatial signatures A_ac which reflect the spatially dominant strain profiles induced by rolling element passes and describe how the basis functions P_ac influence the behaviour of each sensor as measured in Data_ac, and wherein a ball pass angle of the rolling elements and the rotational speed of a cage which separates the rolling elements of the bearing are computed from the recovered time basis functions P_ac.

9. System of claim 8, wherein the bearing arrangement comprises a thrust rolling element bearing (115) is instrumented with a sensor arrangement comprising n uniformly spaced strain sensing elements, and wherein the processor is further configured to compute an axial force acting on the thust bearing from the recovered time basis functions P_ac.

10. System of claim 8 or 9, wherein the processor is configured to create a frequency spectrum of the strain signals Data _ac received from each sensor arrangement, using the computed ball pass angle, by:

   • averaging the sensor signals Data_ac as a function of time; and
   • averaging the time signals of all sensors as a function of ball pass angle.

   and is further configured to analyse an energy content of the created spectrum, and to monitor the analysed energy content as an indicator of developing faults.

11. System of any preceding claim, wherein the bearing arrangement comprises two radial rolling element bearings (116, 117) and a thrust rolling element bearing (115) and each of the bearings (is instrumented with a sensor arrangement comprising n uniformly spaced strain sensing elements, and wherein the processor is configured to compute axial and radial force components acting on each bearing and is further configured to compute at least one parameter of interest associated with the system selected from input torque, output thrust torque and output thrust force, based on force-moment equations that define relations between the system parameters of interest and the forces transmitted via the bearings.

12. System of claim 11, wherein the at least one parameter of interest can be computed from a subset of the calculated forces, and wherein the processor is configured to solve the force-moment equations, using a known input value for the parameter of interest, to compute a calibration factor for each sensor arrangement that relates measured strain to force.

13. System of claim 11, wherein:

   • the parameter of interest is input torque and may be calculated from a subset of the forces acting on the radial bearings (116, 117);
   • one of the radial bearings has been calibrated in advance; and
   • the processor is configured to solve the force-moment equations to calculate a calibration factor for the other bearing.

14. System of any preceding claim, wherein the system is a marine propulsion powertrain, an industrial powertrain, an automotive driveline or a screw compressor.

15. System of any preceding claim, wherein the system is a marine propulsion powertrain, whereby the first meshing component is forward gear (107) or a reverse gear (108), depending on mode of operation, and wherein the processor is further configured to detect a change in the mode of operation by detecting a shift in the direction of the resultant force vector that is computed for at least one of the instrumented bearings.

100

105

127

107

110

128

150

120

108

Fig. 1a

4A

116

115

110

4D    4B

117

110

Fig. 1b

Fig. 1c

Fig. 2a

Fig. 2b

EP 4 671 553 A1

Fig. 2c

Fig. 2d

Fig. 2e

Fig. 2f

Time basis function x signature: 0th harmonic

Sensor position [Rad] @ 1 time instance

Time basis function x signature: 1st harmonic

231

Sensor position [Rad] @ 1 time instance

Time basis function x signature: 2nd harmonic

Sensor position [Rad] @ 1 time instance

Time basis function x signature: 3th harmonic

Sensor position [Rad] @ 1 time instance

Time basis function x signature: all harmonics

Data1s
sum of harmonic components

Sensor position [Rad] @ 1 time instance

240

Fig. 2g

305
303
301

harmonic components of strain envelope [mum/m]

Sensor Angle [degrees]

Fig. 3a

Fig. 3b

Europäisches
Patentamt

European
Patent Office

Office européen
des brevets

**EUROPEAN SEARCH REPORT**

Application Number

EP 24 18 5467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 995 349 B2 (JTEKT CORP [JP])<br>12 June 2018 (2018-06-12)<br>* figure 1 *<br>* claim 1 *<br>* column 6, line 58 - line 67 *<br>* column 11, line 10 - line 19 *<br>* column 11, line 53 - line 57 *<br>----- | 1-15 | INV.<br>F16C19/52<br>G01L5/00<br>G01M13/04 |
| A | GB 2 582 597 A (S360 GROUP B V [NL])<br>30 September 2020 (2020-09-30)<br>* figure 1 *<br>* claim 1 *<br>* page 11, line 7 - line 10 *<br>----- | 1-15 | |
| A | US 5 952 587 A (RHODES JOHN H [US] ET AL)<br>14 September 1999 (1999-09-14)<br>* figures 1,2A *<br>* column 5, line 35 - line 55 *<br>----- | 1-15 | |
| | | | **TECHNICAL FIELDS SEARCHED (IPC)**<br><br>F16C<br>G01L<br>G01M<br>F03D<br>F16D<br>H02K |

The present search report has been drawn up for all claims

| Place of search | Date of completion of the search | Examiner |
|---|---|---|
| The Hague | 19 November 2024 | Rambaud, Patrick |

EPO FORM 1503 03.82 (P04C01)

## ANNEX TO THE EUROPEAN SEARCH REPORT
## ON EUROPEAN PATENT APPLICATION NO.

EP 24 18 5467

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | | Publication date | Patent family member(s) | | Publication date |
|---|---|---|---|---|---|
| US 9995349 | B2 | 12-06-2018 | CN | 105473850 A | 06-04-2016 |
| | | | DK | 3034872 T3 | 13-05-2019 |
| | | | EP | 3034872 A1 | 22-06-2016 |
| | | | ES | 2723353 T3 | 26-08-2019 |
| | | | US | 2016195145 A1 | 07-07-2016 |
| | | | WO | 2015022934 A1 | 19-02-2015 |
| GB 2582597 | A | 30-09-2020 | NONE | | |
| US 5952587 | A | 14-09-1999 | DE | 19937203 A1 | 09-03-2000 |
| | | | US | 5952587 A | 14-09-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5952587 A

- GB 2582597 A